(19) **Europäisches Patentamt / European Patent Office / Office européen des brevets**

(11) **EP 4 078 778 B1**

(12) **FASCICULE DE BREVET EUROPEEN**

(45) Date de publication et mention de la délivrance du brevet:
**29.07.2026 Bulletin 2026/31**

(21) Numéro de dépôt: **20848717.3**

(22) Date de dépôt: **18.12.2020**

(51) Classification Internationale des Brevets (IPC):
**H02K 3/12** *(2006.01)*    **H02K 3/28** *(2006.01)*

(52) Classification Coopérative des Brevets (CPC):
**H02K 3/12; H02K 3/28**

(86) Numéro de dépôt international:
**PCT/FR2020/052542**

(87) Numéro de publication internationale:
**WO 2021/123673 (24.06.2021 Gazette 2021/25)**

(54) **MACHINE ELECTRIQUE DOUBLE TRIPHASEE ET PROCEDE DE COMMANDE D'UNE TELLE MACHINE**

DREIPHASIGE ZWEIPHASEN-ELEKTROMASCHINE UND VERFAHREN ZUM STEUERN EINER SOLCHEN MASCHINE

THREE-PHASE DUAL ELECTRIC MACHINE AND METHOD FOR CONTROLLING SUCH A MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1915009**

(43) Date de publication de la demande:
**26.10.2022 Bulletin 2022/43**

(73) Titulaire: **Moving Magnet Technologies**
**25000 Besançon (FR)**

(72) Inventeurs:
• **GERBER, Mathieu**
  **25000 Besançon (FR)**
• **LAFORGE, Damien**
  **25320 CHEMAUDIN ET VAUX (FR)**
• **CALLERANT, Guillaume**
  **68210 Chavannes-sur-l'Étang (FR)**

(74) Mandataire: **IP Trust**
**2, rue de Clichy**
**75009 Paris (FR)**

(56) Documents cités:
EP-A1- 1 225 676     EP-A1- 2 991 206
CN-A- 106 712 428     US-A1- 2005 012 479
US-A1- 2006 284 510     US-A1- 2017 264 178

EP 4 078 778 B1

## Description

### Domaine de l'invention

La présente demande concerne le domaine des machines électriques polyphasées ainsi que leur contrôle et concerne plus particulièrement les machines présentant plusieurs systèmes bobinés triphasés devant travailler à des températures environnantes relativement importantes, typiquement de 160°C.

De manière préférentielle mais non limitative, l'invention trouvera une utilisation privilégiée dans des applications automobiles exigeantes, telles que par exemple dans un déphaseur électrique d'arbre à cames ou encore dans un actionneur de décharge pour turbocompresseur, applications à proximité de source d'émission calorique importante et devant présenter une grande compacité pour s'intégrer dans l'environnement.

### Etat de la technique

On connait déjà dans l'état de la technique, les documents suivants, présentant des architectures électriques polyphasées avec deux systèmes triphasés :
Le document EP3098963 présente par exemple une architecture double triphasée minimisant le mode commun de la machine lorsque pilotée en commande vectorielle. La commande vectorielle permet d'obtenir de bonnes performances de la machine en termes de régularité de couple mais présente l'inconvénient de nécessiter un contrôle complexe avec une électronique de commande évoluée ainsi qu'un capteur de position précis.

Le document US2014375232 présente aussi une architecture double triphasée ayant deux sources d'alimentation distinctes avec un circuit de transfert d'énergie entre les deux systèmes triphasés. Là encore, la commande de la machine est une commande vectorielle avec de plus la nécessité de doubler les sources d'alimentation.

Le document WO2016012703 présente aussi une architecture double triphasée ayant deux modules distincts de commande, à destination de l'automobile, les deux modules étant interconnectés pour minimiser les pertes totales de ces modules. Le type de commande n'est pas précisé et nécessite un contrôle de l'angle de phase en permanence pour les deux modules électroniques. Il est par ailleurs bien connu de réaliser un décalage de 30° entre deux systèmes triphasés dans le but d'obtenir l'équivalent d'une architecture hexaphasée équilibrée.

Enfin, le document EP3224929 (US 2017/264178 A1) présente une architecture double triphasée avec l'utilisation d'une connexion étoile et d'une connexion triangle, les deux réseaux triphasés étant associés à deux sources de tension de valeur différente.

### Problème non résolu par l'état de l'art

Dans le cadre d'applications automobiles travaillant à moyenne puissance (typiquement quelques dizaines de watts à quelques kilowatts), les architectures de l'état de l'art ne peuvent s'appliquer efficacement et économiquement. En effet, l'utilisation d'une commande vectorielle complexe ou de deux modules électroniques distincts rend la solution trop volumineuse et onéreuse en comparaison des solutions triphasées avec lesquelles elles sont en concurrence, ces dernières étant le plus largement représentées actuellement pour ces applications.

Par ailleurs, les systèmes doubles triphasés existants utilisent la plupart du temps des machines électriques présentant plusieurs bobinages par phase avec imbrication des différentes phases des deux systèmes triphasés rendant la réalisation peu économique et complexe industriellement avec présence typiquement de 12 ou plus bobinages à gérer.

Il n'existe pas dans l'état de l'art de solutions simples et économiques permettant d'obtenir un actionneur compact pour application automobile de moyenne puissance présentant les avantages des systèmes doubles triphasés en comparaison d'un simple système triphasé : couple moyen plus important et plus constant, contenu harmonique des signaux et du couple plus favorable.

### Objets de l'invention

Il est dans l'objet principal de l'invention de proposer des machines électriques double triphasées simples et économiquement viables pour l'industrie automobile dans des applications de moyenne puissance.

Particulièrement, un des objets de l'invention est de proposer une topologie générique de machine double triphasée optimisée pour une commande par bloc, grâce à l'utilisation de dents de découplage séparant magnétiquement les phases de chaque demi-machine et les phases entre les deux demi-machines. La topologie proposée est ainsi adaptée à la simplicité de la commande par bloc en regard des commandes vectorielles de l'état de l'art.

Un des autres objets de l'invention est de limiter ou simplifier de manière importante le nombre de bobinages moteur et de permettre une compacité améliorée par rapport aux solutions équivalentes triphasées.

Il est aussi dans l'objet de l'invention que de proposer une commande simple pour de telles machines, notamment dans le cadre de l'utilisation de commutation par bloc, bien plus simple à implémenter qu'une commande vectorielle, supportée par du matériel électronique économique, tout en conservant les avantages susvisés.

Plus particulièrement, l'invention se rapporte à une machine électrique présentant un premier et un deuxième bobinages triphasés et comprenant un stator formé d'une culasse cylindrique en un matériau ferromagnétique doux prolongée radialement par un ensemble de dents, une partie dudit ensemble de dents portant lesdits bobinages, lesdits bobinages étant distincts l'un de l'autre, ledit premier bobinage triphasé étant connecté électriquement en triangle, ledit deuxième bobinage triphasé étant connecté électriquement en étoile caractérisée en ce que le nombre total desdites dents de stator est égal à $3.(N1 + N2).(k + 1)$ avec k entier naturel supérieur ou égal à 1 représentant le nombre de bobines consécutives d'une même phase d'un bobinage, N1 et N2 étant le nombre de groupes de bobines consécutives d'une même phase respectivement desdits premier et deuxième bobinage, lesdits deux bobinages étant séparés par au moins une dent ne portant aucun bobinage.

On entend par « nombre de bobines consécutives d'une même phase », au sens de la présente invention, le nombre de bobines appartenant à une même phase et à une même demi-machine et qui sont adjacentes et non séparées par une dent non bobinée.

De même, on entend par « nombre de groupes de bobines consécutives d'une même phase », au sens de la présente invention, le nombre de groupes constitués de bobines consécutives appartenant à une même phase d'une même demi-machine séparés par au moins une dent de découplage. Ces groupes de bobines peuvent être séparés d'une seule dent de découplage ou de plusieurs dents et autres groupes de bobines appartenant à d'autres phases.

De manière préférée, lesdits bobinages sont portés par des dents principales, lesdites dents ne portant aucun bobinage étant des dents de découplage et la largeur angulaire de ladite dent de découplage, considérée depuis le centre de la machine et délimitée par la largeur de l'extrémité libre desdites dents, étant inférieure ou égale à la largeur angulaire desdites dents principales. De cette manière, le flux collecté par les dents bobinées est maximisé.

Une machine préférée sera suivant la relation N1=N2=k=1, avec douze dents au total dont six dents bobinées et six dents non bobinées en alternance, réalisant une machine économique à réaliser.

Dans une réalisation possible, ledit premier bobinage triphasé est porté par un premier groupe de dents consécutives de stator alternant dent bobinée et dent non bobinée et ledit deuxième bobinage triphasé est porté par un deuxième groupe de dents consécutives de stator alternant dent bobinée et dent non bobinée, lesdits premier et deuxième groupes de dents de stator étant distincts l'un de l'autre.

Dans une autre réalisation, ledit premier bobinage triphasé et ledit deuxième bobinage triphasé sont alternés de sorte qu'un motif périodique est formé d'une première dent dudit stator portant une bobine dudit premier bobinage, d'une deuxième dent dudit stator ne portant aucun bobinage et d'une troisième dent dudit stator portant une bobine dudit deuxième bobinage, lesdites première, deuxième et troisième dents étant consécutives selon la direction circonférentielle dudit stator.

De manière préférentielle, ledit premier bobinage est réparti angulairement sur un premier secteur de 180°, ledit deuxième bobinage est réparti angulairement sur un deuxième secteur de 180°, lesdits premier et deuxième secteurs étant distincts l'un de l'autre, et chacun desdits bobinages est relié électriquement à un ensemble de pistes électriques, lesdits ensembles de pistes électriques étant distincts l'un de l'autre et répartis angulairement sur deux secteurs angulaires de 180° distincts l'un de l'autre.

L'invention se rapporte aussi à un procédé de commande d'une machine présentant un double bobinage triphasé telle que décrit précédemment caractérisé en ce que chaque bobinage triphasé est commandé par une séquence par blocs et en ce que chaque bobinage triphasé est commandé avec un décalage de 30° électrique l'un par rapport à l'autre, de manière à réaliser douze vecteurs de commande équirépartis électriquement.

De manière préférée, lesdits premier et deuxième bobinages sont alimentés par deux ponts de puissance différents comportant chacun six cellules d'interrupteurs électroniques.

Avantageusement et de manière préférentielle, ladite commande par bloc est réalisée à l'aide d'une modulation de la largeur d'impulsion, dite MLI, une première MLI est appliquée au premier bobinage, une deuxième MLI est appliquée au deuxième bobinage et lesdites première et deuxième MLI sont appliquées de manière à annuler ou minimiser les périodes de recouvrement pendant lesquelles les alternances positives sont appliquées en même temps.

Dans un mode de réalisation, lesdites MLI sont appliquées audits interrupteurs électroniques et dans une variante de réalisation, la machine comprend, en outre et en amont desdits ponts de puissance à six cellules d'interrupteurs électroniques, un pont redresseur formé de quatre cellules d'interrupteurs électroniques recevant en entrée un signal électrique bifilaire en provenance d'une unité centrale de commande, ladite commande par bloc est réalisée à l'aide d'une modulation de la largeur d'impulsion, dite MLI, ladite commande MLI est appliquée en entrée dudit pont redresseur, ledit pont redresseur réalisant le redressement actif de ladite commande MLI et lesdits deux ponts de puissance étant commandés en pas entier.

La commande desdits deux bobinages triphasés peut être réalisée par un seul et même microprocesseur ou bien par deux microprocesseurs distincts.

L'invention concerne aussi un dispositif de réglage pour le déphasage en continu de l'angle de rotation d'un arbre à cames commandant les soupapes d'échange de gaz d'un moteur à combustion interne par rapport à un élément d'entraînement, notamment une chaîne ou courroie, comprenant un moteur électrique de réglage sans balai avec un stator fixe relativement à une couronne extérieure, le moteur étant accouplé à un réducteur à trois entrées/sorties comprenant la couronne extérieure (4), un élément d'entrée et un disque de sortie la couronne extérieure étant emmenée par ledit élément d'entraînement, ledit disque de sortie étant solidaire de l'arbre à cames caractérisé en ce que ledit moteur est une machine électrique conforme aux variantes susvisées.

L'invention concerne encore un système comprenant un actionneur électromagnétique destiné au pilotage d'une soupape de décharge pour turbocompresseur et une soupape de décharge, caractérisé en ce que ledit moteur est une machine électrique conforme aux variantes susvisées.

## Brève description des figures

D'autres caractéristiques et avantages de l'invention ressortiront à la lecture qui suit d'exemples de réalisation détaillés, en référence aux figures annexées qui représentent respectivement :

[Fig 1] Figure 1, une vue en coupe schématique transversale d'une machine selon l'invention dans un premier mode de réalisation,

[Fig 2] Figure 2, une vue en coupe schématique transversale d'une machine selon l'invention dans un deuxième mode de réalisation,

[Fig 3] Figure 3, une vue en coupe schématique transversale d'une machine selon l'invention dans un troisième mode de réalisation,

[Fig 4] Figure 4, une vue en coupe schématique transversale d'une machine selon l'invention dans un quatrième mode de réalisation,

[Fig 5] Figure 5, une vue en coupe schématique transversale d'une machine selon l'invention dans un cinquième mode de réalisation,

[Fig 6] Figure 6, une vue en perspective d'une machine selon l'invention avec un premier exemple de connectique électrique des phases,

[Fig 7] Figure 7, une vue en perspective d'une machine selon l'invention avec un deuxième exemple de connectique électrique des phases,

[Fig 8] Figure 8, une vue en coupe schématique transversale d'une machine selon l'invention dans un autre mode de réalisation,

[Fig 9a]

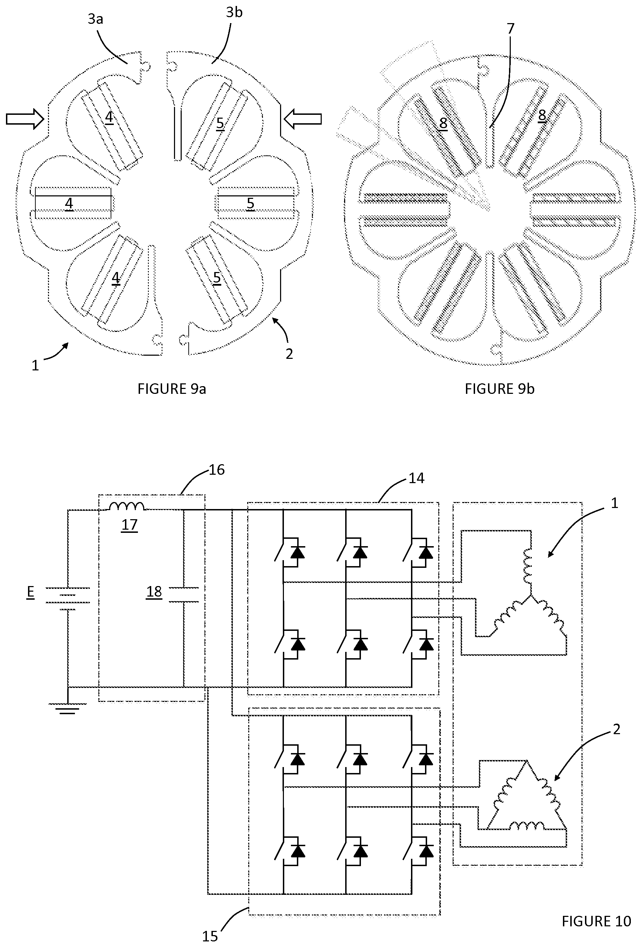

[Fig 9b] Figures 9a et 9b, deux vues en coupe schématique transversale d'une machine selon l'invention dans un mode de réalisation particulier,

[Fig 10] Figure 10, une vue schématique de la connexion d'une machine selon l'invention à un convertisseur de commande dans un premier exemple d'implémentation,

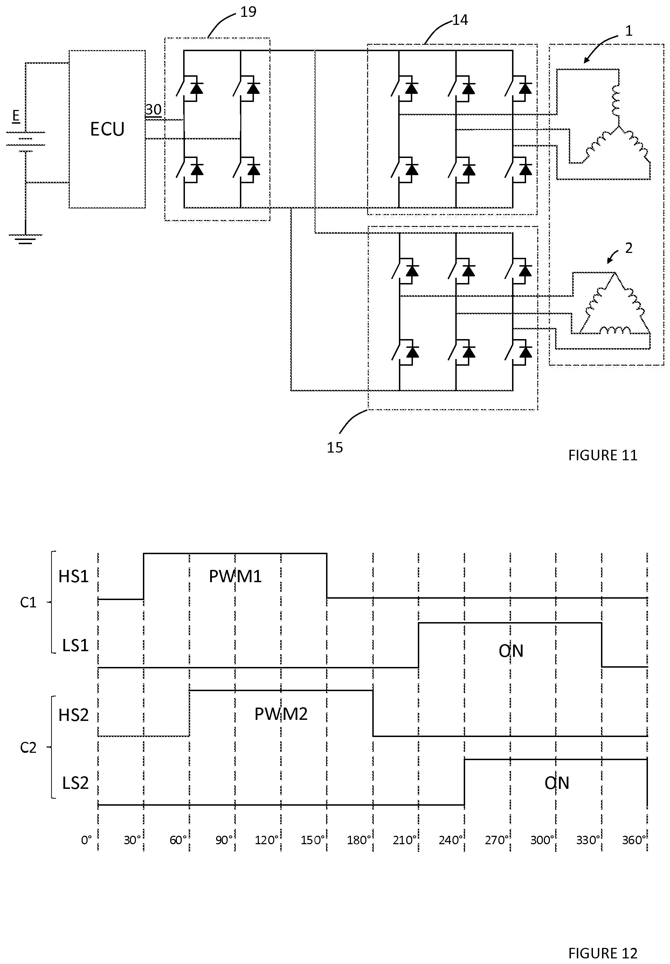

[Fig 11] Figure 11, une vue schématique de la connexion d'une machine selon l'invention à un convertisseur de commande dans un deuxième exemple d'implémentation,

[Fig 12] Figure 12, un chronogramme de commande par bloc utilisant la modulation de la largeur d'impulsion pouvant être utilisé pour commander une machine selon l'invention,

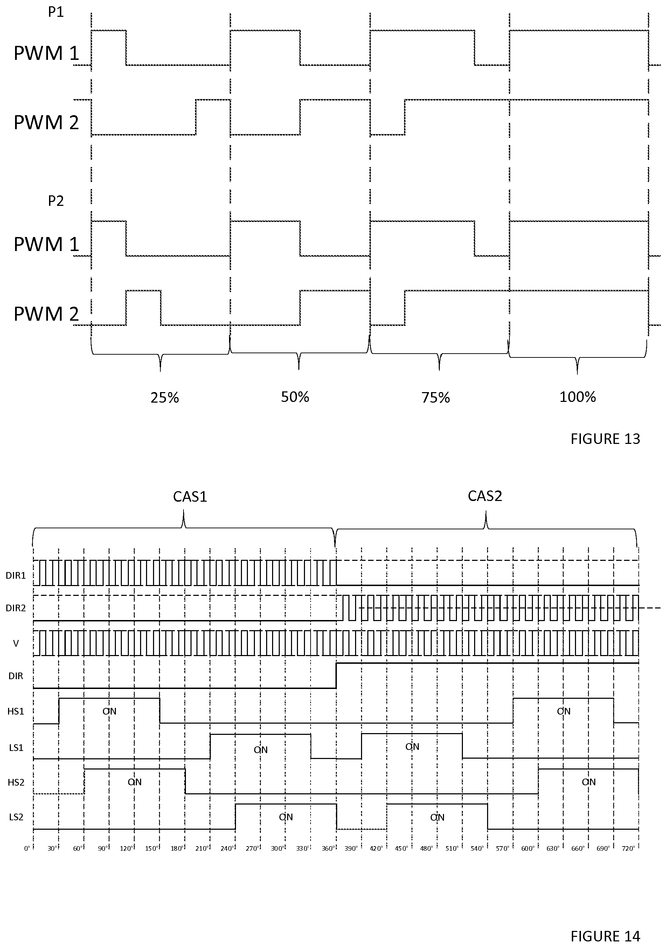

[Fig 13] Figure 13, deux chronogrammes détaillés de modulation de la largeur d'impulsion pour différents rapports cycliques et deux procédés différents pouvant être appliqués à une machine selon l'invention,

[Fig 14] Figure 14, un chronogramme de commande par bloc utilisant la modulation de la largeur d'impulsion pouvant être utilisé pour commander une machine selon l'invention,

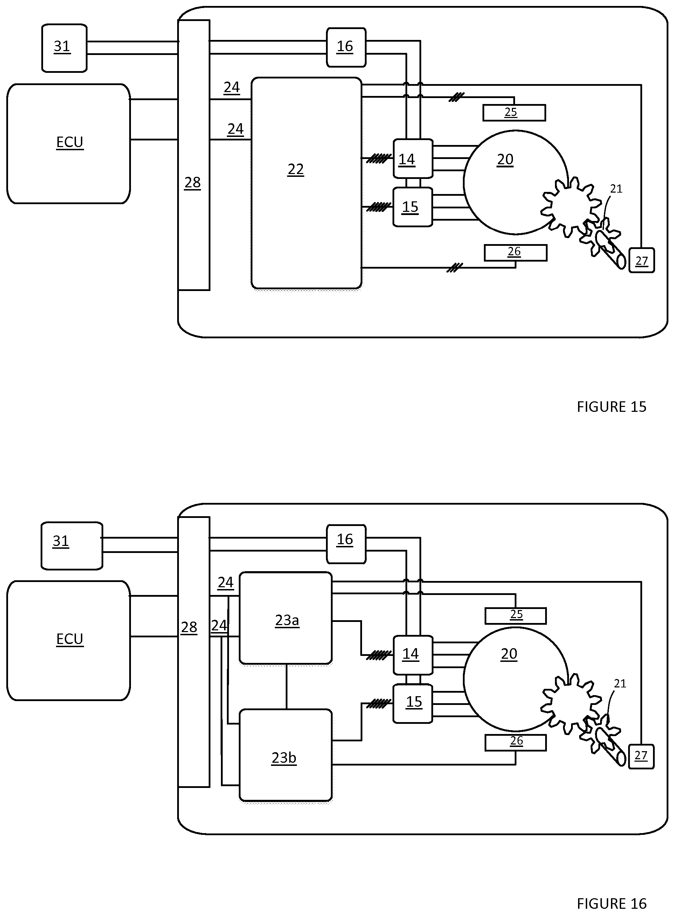

[Fig 15] Figure 15, un premier exemple d'un ensemble mécatronique implémentant une machine selon l'invention,

[Fig 16] Figure 16, un deuxième exemple d'un ensemble mécatronique implémentant une machine selon l'invention,

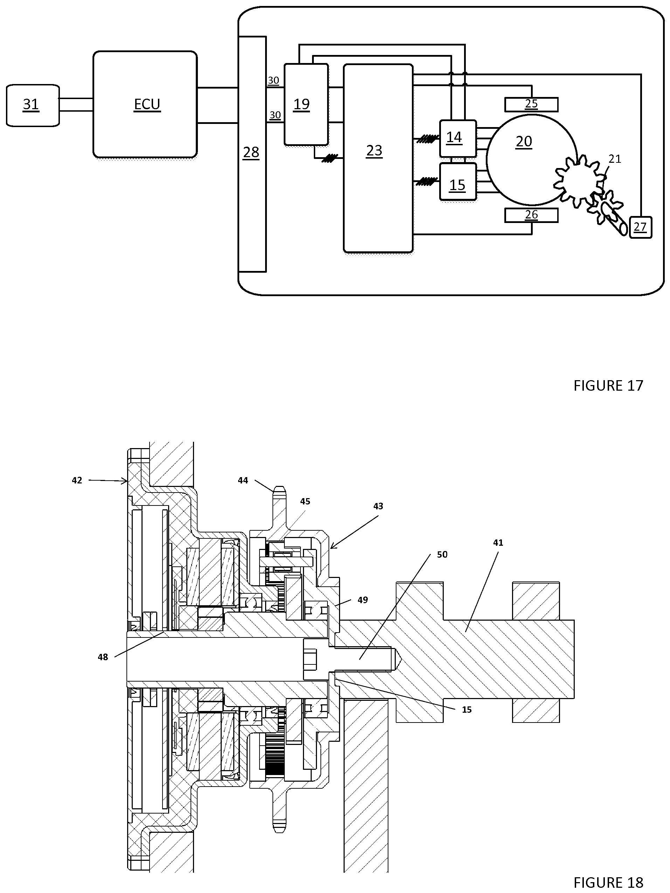

[Fig 17] Figure 17, un troisième exemple d'un ensemble mécatronique implémentant une machine selon l'invention,

[Fig 18] La figure 18 représente une vue en coupe d'un dispositif selon un exemple de réalisation,

[Fig 19a]

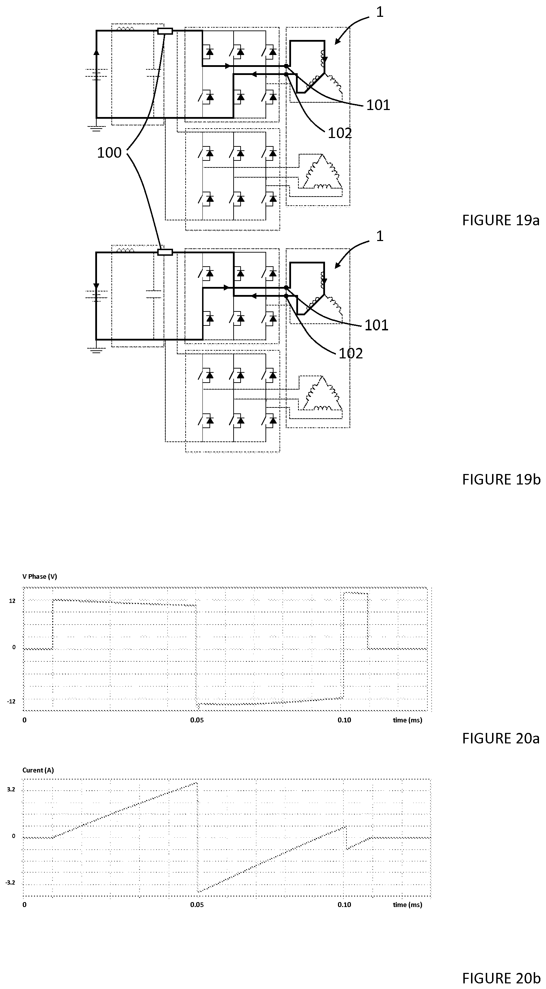

[Fig 19b] Figures 19a et 19b, des vues schématiques de la connexion d'une machine selon l'invention à un convertisseur de commande représentant les deux états de commutation utilisés pour caractériser une phase du premier enroulement triphasé,

[Fig 20a]

[Fig 20b] Figure 20a, la mesure de la tension aux bornes de deux terminaisons d'un onduleur triphasé et Figure 20b, la mesure de courant circulant dans un élément de mesure de courant, lors d'une des séquences de caractérisation des bobines.

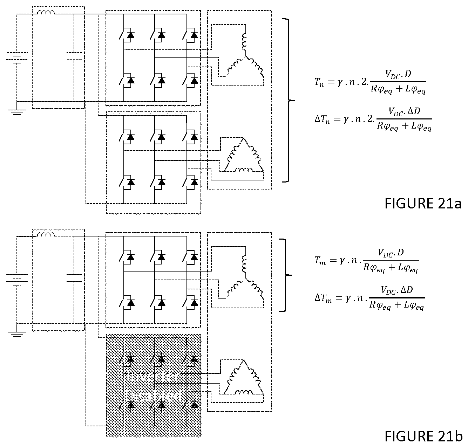

[Fig 21a] Figure 21a et 21b, des vues schématiques de la connexion d'une machine selon l'invention à un convertisseur de commande représentant le pilotage en fort couple et son adaptation en bas couple avec la désactivation d'un des deux enroulements triphasés.

## Description détaillée des modes de réalisation

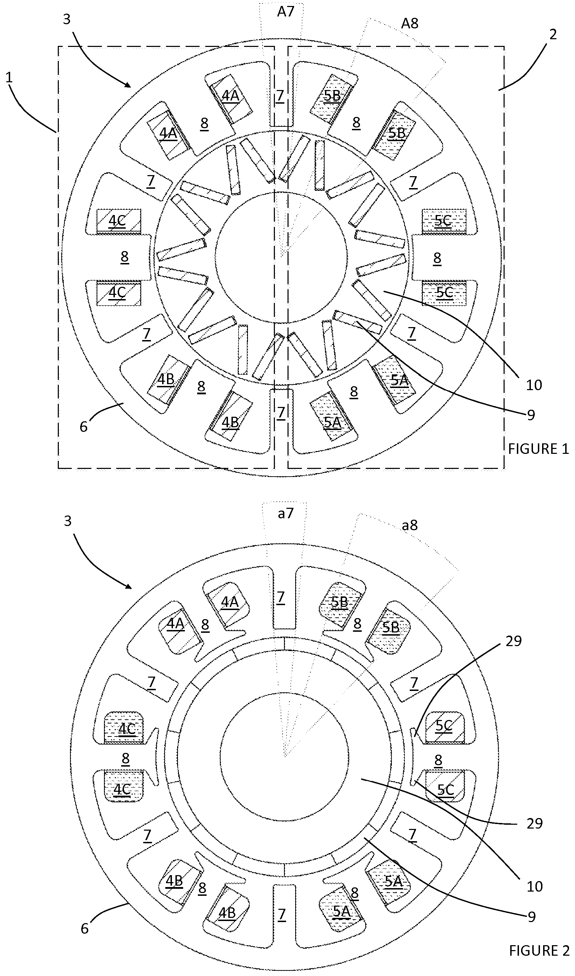

La figure 1 représente un premier exemple d'une machine électrique selon l'invention, comportant un stator (3) composé de deux demi-machines, respectivement (1) et (2), portant chacun un bobinage triphasé, respectivement (4a, 4b, 4c) et (5a, 5b, 5c), chacun des indices a, b et c représentant une phase des systèmes triphasés formés. Le stator (3) est sous la forme d'un anneau cylindrique (6) duquel s'étendent radialement des dents. Chaque demi-machine (1, 2) présente deux types de dents alternant l'une avec l'autre : la dent (8) portant une bobine est dite dent principale et la dent (7) ne portant aucun bobinage est dite dent de découplage et a pour rôle de découpler magnétiquement les phases et les deux demi-machines. La demi-machine (1) composée de l'ensemble des dents principales (8) et des dents secondaires (7), créée ainsi 3 motifs élémentaires, positionnés successivement selon la direction tangentielle. La demi-machine (2) composée de l'ensemble des dents principales (8) et des dents secondaires (7), créée ainsi 3 motifs élémentaires, positionnés successivement selon la direction tangentielle. Dans le cas d'exemple de cette figure 1, les différentes phases d'une première demi-machine (1) sont connectées en triangle et les différentes phases de la deuxième demi-machine (2) sont connectées en étoile. Les dents de découplage ont un angle d'ouverture (a7), le sommet de cet angle étant le centre de rotation du moteur et l'angle étant défini par la largeur de la dent à son extrémité ouverte, qui est inférieur ou égal à l'angle d'ouverture des dents principales (a8) afin de maximiser le flux magnétique récolté par la dent principale (8) et ainsi améliorer les performances de la machine, bien que cette relation ne soit pas strictement nécessaire dans le cadre de la présente invention.

Sur cette figure 1, le rotor est composé d'aimants internes (9) à une culasse rotorique (10) en matériau ferromagnétique et d'un axe (non visible) qui peut être ou non ferromagnétique. Ce rotor n'est montré qu'à titre d'exemple et tout autre type de rotor, utilisé traditionnellement dans toute machine sans balai, peut être utilisé.

La figure 2 présente une variante de réalisation similaire à celle montrée en figure 1 mais diffère de cette dernière par le fait que les dents principales (8) présentent, à leur extrémité ouverte, des évasements (29), ou épanouissements polaires, afin de récolter plus de flux magnétique généré par le rotor et par le fait que le rotor présente des aimants (9) en surface de la culasse (10), ce rotor étant un deuxième exemple de réalisation de rotor.

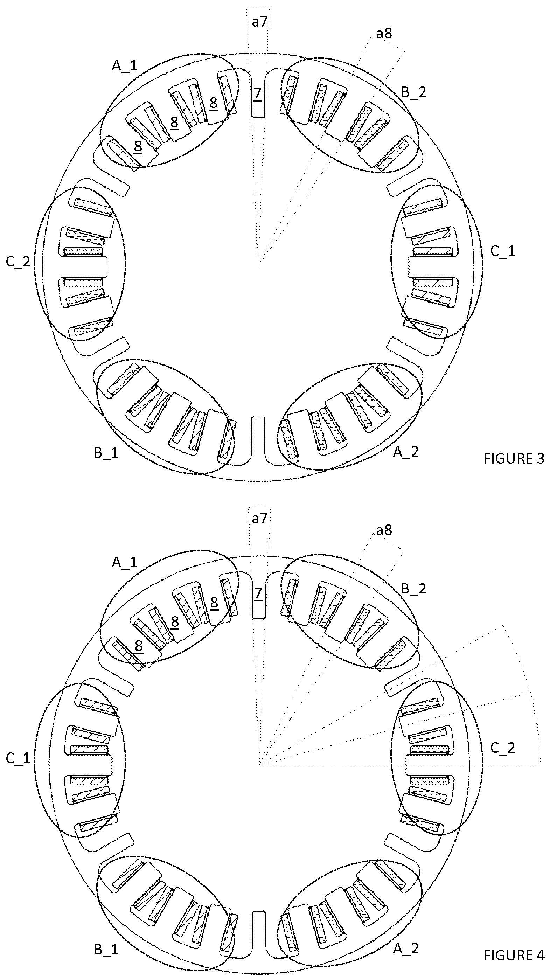

La figure 3 présente une variante de réalisation de machine, sans rotor visible, où chaque demi-machine (1, 2) est composée de trois motifs élémentaires s'étendant sur un angle de 60° mécanique et faits d'un ensemble comportant ici 3 dents principales (8) consécutives et d'une dent de découplage (7), chacune des trois dents principales portant un ensemble de bobines appartenant à la même phase de la même demi-machine. Sur la figure 3, les indices A, B et C font référence aux trois différentes phases de chaque demi-machine (indices _1 et _2) séparées entre elles par une dent de découplage (7) ne portant aucun bobinage. Les deux demi-machines (1) et (2) sont ici imbriquées, car une phase de la première demi-machine (indice _1) est suivie angulairement par une phase de la seconde demi-machine (indice _2), les deux étant séparées par une dent de découplage (7).

En figure 4, une variante de réalisation similaire à celle de la figure 3 est montrée mais pour laquelle les deux demi-machines (1) et (2) sont spatialement positionnées chacune sur 180°, la première demi-machine (indice _1) est composée de 3 motifs élémentaires successifs dans la direction tangente, tout comme la seconde demi-machine (indice _2). Chaque phase (A_2, B_2, C_2, A_1, B_1, C_1) sont portés par trois dents principales (8) et sont séparées par une dent de découplage (7).

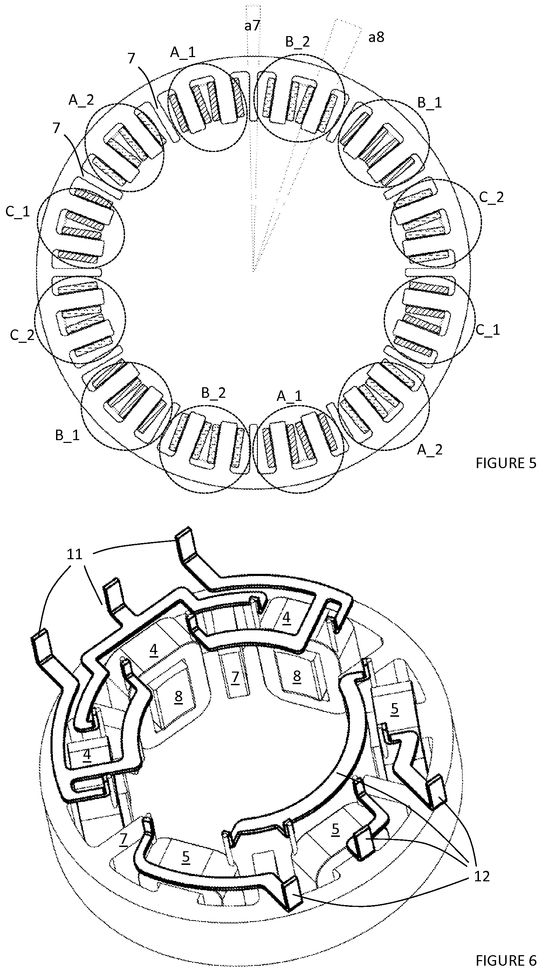

La figure 5 présente une machine à 36 dents présentant quatre bobines par phase avec deux groupes de deux dents opposées diamétralement. Les deux demi-machines (indices _1 et _2) sont imbriquées, c'est-à-dire alternant deux dents bobinées d'une même phase et d'une même machine avec deux dents bobinées d'une même phase et de l'autre machine, chaque groupe de deux dents étant séparés de son voisin par une dent de découplage (7).

La figure 6 représente, à titre d'exemple non limitatif, la connectique d'une machine ayant 6 dents principales (8) et 6 dents de découplage (7). Le stator (3) est fait de deux demi-machines (1) et (2) s'étendant chacune sur un angle d'environ 180°. Cette solution permet ainsi d'assurer la connectique des bobinages grâce à la répartition des courants entre les deux demi-machines, deux ensembles (11) et (12) de pièces conductrices, typiquement en cuivre, assurant la connexion électrique étoile du bobinage de la première demi-machine (1) et la connexion triangle du bobinage de la deuxième demi-machine (2). Les ensembles de pièces conductrices (11) et (12) peuvent avantageusement être disposés sur le même plan afin d'améliorer la compacité de l'ensemble et de réduire les risques de contacts électriques entre les différentes pièces électriques sans utiliser d'isolation spécifique.

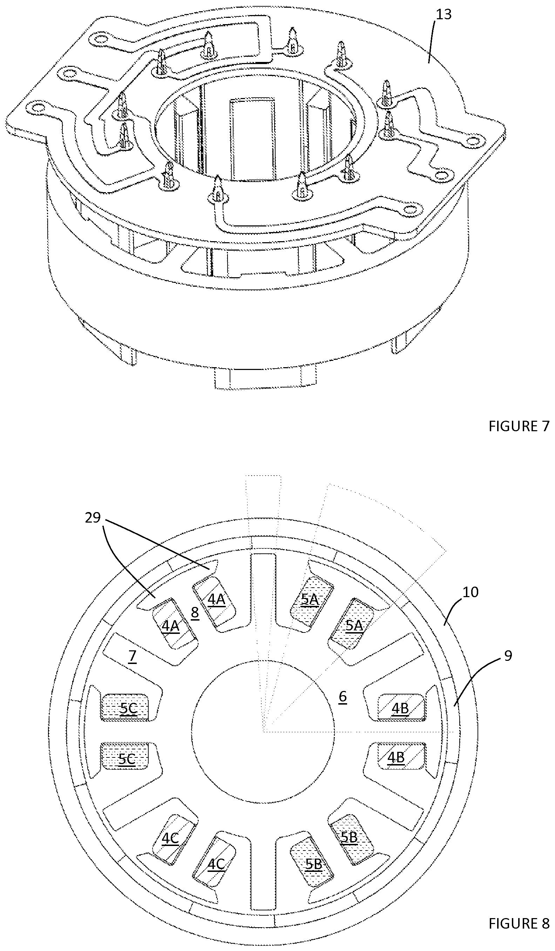

La figure 7 est une alternative de connexion des bobinages des deux demi-machines en utilisant directement un circuit imprimé (13) connecté aux différents bobinages, sans utilisation des pièces conductrices précédemment décrites, les pistes du circuit imprimé (13) réalisant la fonction de connectique en étoile et triangle des bobinages. Dans cette solution, chaque bobine est connectée directement au circuit imprimé (13) grâce à une liaison de type pressfit.

La figure 8 représente une machine électrique selon un mode de réalisation alternatif comprenant un rotor extérieur au stator, comportant une culasse (10) portant un anneau d'aimants (9), où les demi-machines sont imbriquées, les bobines (4A, 4B et 4C) appartenant à une première demi-machine et les bobines (5A, 5B et 5C) appartenant à une deuxième demi-machine et qui a la particularité de présenter des épanouissements polaires (29), c'est-à-dire un élargissement de l'extrémité libre de la dent en face du rotor, sur les dents principales (8), les dents de découplage ayant une largeur constante dans la direction radiale, sans épanouissement à leur extrémité libre.

Les figures 9a et 9b présentent un autre mode de réalisation dans lequel les deux demi-machines (1, 2) sont construites chacune sur un demi-stator (1a, 1b). La figure 9a est une vue avant assemblage, la figure 9b est une vue après assemblage. La délimitation des deux demi-stators (3a, 3b) peut s'effectuer au centre des dents de découplage (7), ou elle peut se faire également sur le bord des dents de découplage (7) comme montré ici.

Cette réalisation permet d'insérer les bobines (4, 5) sur les dents principales (8) plus longues que dans les autres modes de réalisation, en montant les bobines (4, 5) des deux demi-machines avant l'assemblage de la machine complète. Le montage des différentes bobines (4, 5) n'aurait pas pu être possible sur un stator unique, l'ouverture centrale où doit se loger le rotor (non montré), ne permettant pas le passage de ces bobines.

En figure 10, une vue schématique de connexion électrique d'une machine selon l'invention à un convertisseur est montrée. Chaque demi-machine, connectée étoile (1) et triangle (2), est alimentée en tension par un pont triphasé, respectivement (14, 15), composé chacun de six interrupteurs électroniques, selon une configuration classique pour l'homme de métier. Le convertisseur présente en entrée un filtre (16), connecté à la source de tension (E) fait par un ensemble d'inductances (17) et d'un banc de capacité (18). Ce filtre (16) est connecté aux bornes des ponts triphasés (14, 15) connectés aux deux demi-machines (1, 2). La commande adaptée et alternée des différents interrupteurs permet de minimiser la taille du filtre (16) réduisant coût et encombrement global.

La figure 11 représente une vue schématique de connexion électrique d'une machine selon l'invention à un convertisseur permettant le pilotage de la machine hexaphasée via un pilotage bifilaire (30) par pulse, comme celui fourni par l'unité de contrôle électronique (ECU) d'un véhicule alimenté par une source de tension comme une batterie (E), par exemple via une modulation de la largeur d'impulsion, connue sous l'abréviation MLI ou PWM. Parce que le signal bifilaire (30) peut présenter une polarité négative ou positive, c'est à dire une masse électrique pouvant être sur la ligne supérieure ou inférieure, le convertisseur comprend un redresseur (19), ici actif, commandé par quatre interrupteurs électroniques, permettant de passer d'un signal de pulse positif ou négatif à des pulses positives qui alimentent les ponts triphasés (14, 15).

La figure 12 montre le principe de la commande appliquée aux phases des 2 demi-machines. Les commandes C1 et C2 sont appliquées aux branches des ponts triphasés de la figure 10 par exemple, la commande C2 présente un décalage électrique de 30° par rapport à la commande C1, ce décalage angulaire provenant du décalage électrique entre les tensions induites des phases de la seconde demi-machine par rapport à celles de la première. Chaque commande C1 et C2 est composée d'une commande (HS1, HS2) des transistors côté tension, dits *High Side,* recevant une tension hachée de type MLI (PWM1, PWM2) et d'une commande (LS1, LS2) des transistors côté masse, dits *Low Side,* recevant une tension constante (ON). Chaque commande présentée ici est traditionnellement utilisée en bloc pour des machines triphasées et se trouve aussi sous la dénomination anglaise de *Slow decay.*

La figure 13 décrit deux procédés de pilotage des demi-machines, respectivement notés P1 et P2, grâce à des commandes par modulation de la largeur d'impulsion PWM1 et PWM2 qui sont appliquées aux ponts triphasés de chaque demi-machine. Les deux procédés P1 et P2 ont pour but de minimiser les temps de recouvrement pendant lesquels les deux demi-machines sont alimentées en même temps et ce afin de réduire l'ondulation de courant et ainsi de minimiser la taille du filtre décrit précédemment pour le convertisseur pilotant la machine. En alternant au possible l'alimentation entre les deux demi-machines, ce but peut être atteint en fonction du rapport cyclique indiqué en pourcentage sur la figure. La méthode sera d'autant plus efficace que le rapport cyclique sera faible. Comme le montre la figure 13, que ce soit pour le procédé P1 ou P2, aucun recouvrement entre PWM1 et PWM2 n'est observé lorsque le rapport cyclique est inférieur à 50%.

Pour le cas d'exemple P1, le procédé consiste réaliser une symétrie de commande par rapport au milieu de la période. Pour le cas d'exemple P2, le procédé consiste à déclencher la commande PWM2 après la fin de la commande positive PWM1 lorsque le rapport cyclique est inférieur à 50%, puis de minimiser le recouvrement des signaux au-dessus de cette valeur.

La figure 14 représente les signaux typiques appliqués à un convertisseur tel que montré en figure 12. DIR1 et DIR2 représente le signal bifilaire (30). Dans le CAS1 à gauche de la figure, une commande PWM est générée sur la ligne DIR1, de sorte qu'une valeur moyenne positive de tension est obtenue sur cette ligne, alors que la ligne DIR2 est à une valeur nulle, correspondant à la masse électrique. A droite pour le CAS2, DIR2 présente une valeur moyenne positive et DIR1 est à une valeur nulle. Après redressement par l'élément (19), le signal entrant les ponts de puissance (14, 15) est tel que présenté en ligne V, mais la commande (HS1, LS1, HS2, LS2) des interrupteurs des ponts de puissance (14, 15) sera effectuée en fonction de la polarité de DIR1 et DIR2, et sera différente dans les deux CAS1 et CAS2.

La figure 15 représente un ensemble mécatronique permettant de créer un mouvement en utilisant l'énergie d'une batterie (31) pour véhicule délivrant une tension constante, reliée à deux ponts triphasés (14, 15), après filtrage (16), permettant de générer des tensions alternatives aux bornes de la machine hexaphasée (20) connectée directement à une charge mécanique (21). Les ponts triphasés (14, 15) sont contrôlés par un microcontrôleur (22) connecté à une unité de calcul centralisée (ECU). Le contrôleur (22) échange des informations via un lien bidirectionnel (24) avec l'unité centrale (ECU) et reçoit des informations de capteurs de positions (25, 26) permettant de connaître la position moteur et d'un capteur de position absolu (27) en sortie de charge. La connexion à la batterie (19) se fait via un connecteur (28) permettant le transfert des ordres de l'unité de calcul (ECU) et des lignes de puissance provenant de la batterie (31).

La figure 16 représente une variante de réalisation d'un ensemble mécatronique similaire à la figure 15 mais utilisant deux contrôleurs (23a, 23b) au lieu d'un seul, chacun de ces contrôleurs (23a, 23b) pilotant les ponts triphasés respectivement (14, 15) à partir des informations de position venant des capteurs (25, 26) de position du rotor de la machine (20).

La figure 17 représente un mode de réalisation particulier d'un ensemble mécatronique utilisant une machine selon l'invention, mettant en œuvre le convertisseur montré en figure 11. Dans cet ensemble, une batterie (31) alimente une unité de contrôle électronique (ECU) qui fournit, au travers d'un connecteur (28), un signal bifilaire (30), préférentiellement sous la forme d'un signal MLI, qui passe par un redresseur (19) avant d'alimenter les ponts triphasés (14, 15) et le microcontrôleur (23) afin de piloter et commander la machine hexaphasée.

### Application : déphaseur électrique

Une machine électrique selon l'invention est particulièrement adaptée à l'entrainement d'un déphaseur d'arbre à cames.

La figure 18 représente une vue en coupe d'un dispositif selon un exemple de réalisation, accouplé à un arbre à cames (41). Le dispositif est constitué par une machine électrique (42) telle que décrite dans ce qui précède, associée à un réducteur (43), ici de type trochoïdal.

Le réducteur (43) comprend une couronne extérieure (44) entraînée par la chaîne ou courroie de distribution du moteur à combustion interne (non représentée). Cette couronne extérieure (44) présente un diamètre extérieur typique de 100 à 150 millimètres et présente des dents extérieures adaptées à l'entraînement par ladite chaîne de distribution. Elle présente à sa surface intérieure un chemin denté (45), de forme tubulaire. Cette couronne extérieure (44) est libre en rotation par rapport à l'arbre à came (41).

Une roue dentée excentrée présente une section inférieure à la section intérieure de la couronne extérieure (44), le nombre de dents de la roue dentée étant inférieur au nombre de dents du chemin denté (45) sur la surface intérieure de la couronne extérieure (44), à module identique.

La différence entre le nombre de dents de la roue dentée excentrée et le nombre de dents du chemin denté sur la surface intérieure de la couronne extérieure est avantageusement d'une dent afin de maximiser le rapport de réduction du réducteur trochoïdal (43).

La roue dentée excentrée est guidée par un roulement monté sur l'arbre unique (48) au niveau d'un excentrique dont l'axe de révolution est excentré par rapport à l'axe médian de l'arbre unique (48). Le décalage entre ces deux axes est généralement compris entre 0.1 et 1 mm et dépend du module de la denture de l'engrènement trochoïdal.

Ce disque de sortie (49) est par ailleurs solidaire de l'arbre à cames (41) par une vis (50) avec lequel il est accouplé par l'intermédiaire d'un épanouissement radial (15), proche de l'axe de rotation de l'ensemble formé.

L'invention n'est pas limitée au réducteur de type trochoïdal. En effet, d'autres réducteurs peuvent être utilisés, par exemple un réducteur de type épicycloïdal. Le choix d'un réducteur ou d'un autre peut être dicté en fonction du rapport de réduction souhaité et en fonction du coût final de la solution.

Différents détails de réalisation d'un tel déphaseur d'arbre à came sont décrits dans le brevet européen EP3464841, qui ne constitue pas une limitation de la protection mais un simple exemple de mécanisme susceptible d'être entraîné par une machine électrique selon l'invention.

### Application : actionneur de décharge pour turbocompresseur

Une machine électrique selon l'invention est particulièrement adaptée à au pilotage d'une soupape de décharge pour turbocompresseur de moteurs à combustion interne, communément appelée « Waste Gate ». Cette vanne de décharge et réguler ainsi la pression des gaz dans la turbine du turbocompresseur.

Les moteurs thermiques (pour véhicule automobile, camion, engin de chantier...) fonctionnent grâce à l'explosion d'un mélange air / carburant dans la chambre de combustion des cylindres.

La boucle d'air du moteur, dont la fonction est l'acheminement, la gestion et l'évacuation de l'air alimentant le moteur, fonctionne à l'aide de différentes vannes. Pour améliorer les performances du moteur thermique, certains véhicules sont équipés de turbocompresseur dont le rôle est de suralimenter en air la chambre de combustion.

Une machine électrique conforme à l'invention représente une solution particulièrement bien indiquée pour ces applications exigeantes telles que les turbocompresseurs de suralimentation.

### Application : méthode électronique d'équilibrage des phases

Une machine électrique selon l'invention présente une sensibilité intrinsèque aux déséquilibrages des impédance ou inductance de ses phases. Ces déséquilibrages sont courants mais souvent négligeables dans les machines usuelles et peuvent provenir des dispersions de fabrication sur le nombre de spires constituant les bobines, de la qualité variable des liaisons électriques par press-fit ou par soudure, d'un déséquilibrage des longueurs des liaisons électriques, etc. Dans le cas particulier d'une machine électrique selon l'invention, la différence de topologie des deux demi-machines, l'une étant connectée en étoile et l'autre en triangle, implique nécessairement d'utiliser un nombre de spires différent entre les bobines de ces deux demi-machines pour obtenir un courant équivalent à tension d'onduleur identique. Cette différence répond à un ratio idéal et le nombre de spires effectif de chacune des deux demi-machines est obtenu en arrondissant à l'entier le plus proche. Ceci implique qu'une erreur, équivalente à l'impédance d'une demi spire ou plus, peut être commise et cette erreur est d'autant plus importante que le nombre de spires constituant les bobinages est faible, on obtient donc un déséquilibre en courant entre les phases des deux demi-machines pouvant aller jusqu'à 10%. Ce déséquilibre provoque une ondulation de couple complexifiant le contrôle, une usure prématurée du système de guidage, ainsi qu'une usure prématurée des composant électroniques par une sollicitation plus importante de l'une des deux demi-machines par rapport à l'autre.

Une méthode économique de caractérisation et de compensation est proposée dans les figures 19a, 19b, 20a et 20b. Cette méthode nécessite l'ajout d'au moins un élément de mesure de courant (100) sur une des lignes DC entre les onduleurs et le filtre, visible sur les figures 19a et 19b. L'utilisation de l'au moins un élément de mesure de courant (100), positionné entre les onduleurs et le filtre et couplé à un algorithme permettant de discriminer les compositions de chaque ensemble onduleur / moteur, permet une optimisation de l'architecture électrique. A noter qu'il est possible d'utiliser de multiples éléments de mesure de courant (100), par exemple un par onduleur, de manière à améliorer la précision de cette mesure.

Ainsi, une caractérisation, en sortie de ligne de production, des impédances et inductances de chaque phase du moteur peut être effectuée à l'aide de l'application d'une simple séquence de commande et de l'analyse dudit courant. Cette séquence consiste à appliquer la tension de la batterie aux bornes d'une phase pendant un temps suffisamment long pour analyser les régimes transitoires du courant dus aux effets inductifs, tel que montré en figure 19a pour une phase de la demi-machine (1) bobinée en étoile, puis à appliquer la tension opposée à cette même phase, tel que représenté figure 19b, durant un temps suffisamment long pour observer la nouvelle variation de courant. La tension, mesurée aux bornes des terminaisons (101, 102) de la phase alimentée, présente typiquement l'allure donnée dans la figure 20a et le courant, mesuré à l'aide de l'élément de mesure de courant (100), est donné dans la figure 20b. Les mesures de la constante de temps et de l'amplitude dudit courant permettent de déduire les valeurs de l'inductance et de l'impédance de la phase. En répétant cette mesure pour toutes les phases des deux demi-machines, nous pouvons calculer un ratio pour chaque phase, rapporté à la phase présentant les moins bonnes caractéristiques. Ce ratio est alors utilisé de manière à pondérer individuellement le rapport cyclique de la modulation en largeur d'impulsion gérant l'onde de tension alimentant les demi-machines.

## Application : méthode électronique d'optimisation du contrôle de couple

Une machine électrique selon l'invention présente une régulation de couple de résolution constante sur toute sa plage fonctionnelle. Ceci grâce à la modification du rapport cyclique d'une modulation en largeur d'impulsion permettant un contrôle en tension des phases. Cette vérité s'applique également aux machines électriques traditionnelles, triphasées par exemple. Or, il est souvent nécessaire dans les applications de synchronisation de deux systèmes rotatifs, composés de manière non limitative de deux sous-ensembles électriques, d'avoir une très bonne résolution pour réguler de faibles variations de charge et donc une réponse en couple précise de la machine électrique. Une telle résolution n'est pas nécessaire lorsque les variations de charge sont importantes et qu'une réponse plus importante en couple de la machine électrique est requise.

La spécificité de l'invention nous permet d'améliorer la résolution de la régulation en couple sur la plage de fonctionnement où le couple est le plus faible, jusqu'à la moitié du couple nominal de l'ensemble, comme décrit dans la figure 21a. Dans cette figure, $T_n$ est le couple en régime normal, y est la constante de couple, $n$ est le nombre de spires de chaque bobine, $V_{DC}$ est la tension d'alimentation de l'onduleur, $D$ est le rapport cyclique des transistors composant l'onduleur, et $R\varphi_{eq}$ et $L\varphi_{eq}$ sont la résistance et l'inductance équivalente d'une bobine pour les deux demi-machines, connectées en étoile et en triangle, moyennant des rapports cycliques différents. Il est possible de déterminer la plus petite variation possible du couple en régime normal, en fonction de la variation minimale du rapport cyclique de la commande en tension $\Delta D$, selon

$$\Delta T_n = \gamma \,.\, n \,.\, 2. \frac{V_{DC}.\, \Delta D}{R\varphi_{eq} + L\varphi_{eq}}.$$

Une méthode algorithmique est donc proposée afin de désactiver une des deux demi-machines lorsque la régulation du couple nécessaire est en dessous de la moitié du couple nominal, comme représenté dans la figure 21b, où $T_m$ est le couple accessible dans ce mode optimisé. Ceci permet de dédier l'intégralité des pas de la modulation en largeur d'impulsion à la seule demi-machine active au lieu de les partager entre les deux demi-machines. Ceci revient donc à doubler la fréquence de modulation pour la demi-machine active et permet de diviser par deux la variation minimale du rapport cyclique, $\Delta D,$ conduisant à diviser par deux la résolution de couple de l'ensemble,

$$\Delta T_m = \gamma \,.\, n \,.\, 2. \frac{V_{DC}.\, \Delta D}{R\varphi_{eq} + L\varphi_{eq}}.$$

Doubler la fréquence de modulation de la machine active en désactivant la seconde n'est pas l'unique option possible, il est aussi envisagé de volontairement la dégrader sur certaines plages de couple de manière à assurer une meilleure transition entre la plage de faible couple, où une unique machine est active, et la plage de fort couple où les deux machines le sont. Il est également envisagé de ne pas transférer l'intégralité des pas de commande de la machine inactive, mais uniquement une partie, de manière à obtenir une résolution progressivement variable.

## Revendications

1. Machine électrique présentant un premier (4a, 4b, 4c) et un deuxième (5a, 5b, 5c) bobinages triphasés et comprenant un stator (3) formé d'une culasse (10) cylindrique en un matériau ferromagnétique doux prolongée radialement par un ensemble de dents (7, 8), une partie dudit ensemble de dents (8) portant lesdits bobinages, lesdits bobinages (4a, 4b, 4c, 5a, 5b, 5c) étant distincts l'un de l'autre, ledit premier bobinage (4a, 4b, 4c) triphasé étant connecté électriquement en triangle, ledit deuxième bobinage (5a, 5b, 5c) triphasé étant connecté électriquement en étoile **caractérisée en ce que** le nombre total desdites dents (7, 8) de stator (3) est égal à $3 \cdot (N1 + N2) \cdot (k + 1)$ avec k entier naturel supérieur ou égal à 1 représentant le nombre de bobines consécutives d'une même phase d'un bobinage, N1 et N2 étant le nombre de groupes de bobines consécutives d'une même phase respectivement desdits premier et deuxième bobinage, lesdits deux bobinages étant séparés par au moins une dent (7) ne portant aucun bobinage, et aussi chaque groupe de bobines consécutives d'une même phase étant séparé par au moins une dent (7) ne portant aucun bobinage.

2. Machine électrique selon la revendication 1 **caractérisée en ce que** lesdits bobinages sont portés par des dents principales (8), **en ce que** lesdites dents ne portant aucun bobinage sont des dents de découplage (7) et **en ce que** la largeur angulaire de ladite dent de découplage (7), considérée depuis le centre de la machine et délimitée par la largeur de l'extrémité libre desdites dents, est inférieure ou égale à la largeur angulaire desdites dents principales (8).

3. Machine électrique selon la revendication 1 **caractérisée en ce que** N1=N2=k=1, ledit stator (3) présentant douze dents (7, 8) au total dont six dents bobinées et six dents non bobinées en alternance.

4. Machine électrique selon l'une quelconque des revendications 1, 2 ou 3 **caractérisée en ce que** ledit premier bobinage triphasé est porté par un premier groupe de dents consécutives de stator alternant dent bobinée et dent non bobinée et **en ce que** ledit deuxième bobinage triphasé est porté par un deuxième groupe de dents consécutives de stator alternant dent bobinée et dent non bobinée, lesdits premier et deuxième groupes de dents de stator étant distincts l'un de l'autre.

5. Machine électrique selon l'une quelconque des revendications 1, 2 ou 3 **caractérisée en ce que** ledit premier bobinage triphasé et ledit deuxième bobinage triphasé sont alternés de sorte qu'un motif périodique est formé d'une première dent dudit stator portant une bobine dudit premier bobinage, d'une deuxième dent dudit stator ne portant aucun bobinage et d'une troisième dent dudit stator portant une bobine dudit deuxième bobinage, lesdites première, deuxième et troisième dents étant consécutives selon la direction circonférentielle dudit stator.

6. Machine électrique selon la revendication 4 **caractérisée en ce que** ledit premier bobinage est réparti angulairement sur un premier secteur de 180°, **en ce que** ledit deuxième bobinage est réparti angulairement sur un deuxième secteur de 180°, lesdits premier et deuxième secteurs étant distincts l'un de l'autre, et en ce chacun desdits bobinages est relié électriquement à un ensemble de pistes électriques, lesdits ensembles de pistes électriques étant distincts l'un de l'autre et répartis angulairement sur deux secteurs angulaires de 180° distincts l'un de l'autre.

7. Procédé de commande d'une machine présentant un double bobinage triphasé selon l'une quelconque des revendications précédentes **caractérisé en ce que** chaque bobinage triphasé est commandé par une séquence par blocs et **en ce que** chaque bobinage triphasé est commandé avec un décalage de 30° électrique l'un par rapport à l'autre.

8. Procédé de commande d'une machine présentant un double bobinage triphasé selon la revendication 7 **caractérisé en ce que** lesdits premier et deuxième bobinages sont alimentés par deux ponts de puissance (14, 15) différents comportant chacun six cellules d'interrupteurs électroniques.

9. Procédé de commande d'une machine présentant un double bobinage triphasé selon la revendication 8 **caractérisé en ce que** ladite commande par bloc est réalisée à l'aide d'une modulation de la largeur d'impulsion, dite MLI, **en ce qu'**une première MLI est appliquée au premier bobinage, **en ce qu'**une deuxième MLI est appliquée au deuxième bobinage et **en ce que** lesdites première et deuxième MLI sont appliquées de manière à annuler ou minimiser les périodes de recouvrement pendant lesquelles les alternances positives sont appliquées en même temps.

**10.** Procédé de commande d'une machine présentant un double bobinage triphasé selon la revendication 9 **caractérisé en ce que** lesdites MLI sont appliquées audits interrupteurs électroniques.

**11.** Procédé de commande d'une machine présentant un double bobinage triphasé selon la revendication 8 **caractérisé en ce que** la machine comprend, en outre et en amont desdits ponts de puissance à six cellules d'interrupteurs électroniques, un pont redresseur formé de quatre cellules d'interrupteurs électroniques recevant en entrée un signal électrique bifilaire en provenance d'une unité centrale de commande, ladite commande par bloc étant réalisée à l'aide d'une modulation de la largeur d'impulsion, dite MLI, ladite commande MLI étant appliquée en entrée dudit pont redresseur, ledit pont redresseur réalisant le redressement actif de ladite commande MLI et lesdits deux ponts de puissance étant commandés en pas entier.

**12.** Procédé de commande d'une machine présentant un double bobinage triphasé selon l'une quelconque des revendications 7 à 11 **caractérisée en ce que** la commande desdits deux bobinages triphasés est réalisée par un seul et même microprocesseur.

**13.** Procédé de commande d'une machine présentant un double bobinage triphasé selon l'une quelconque des revendications 7 à 11 **caractérisée en ce que** la commande desdits deux bobinages triphasés est réalisée par deux microprocesseurs distincts.

**14.** Dispositif de réglage pour le déphasage en continu de l'angle de rotation d'un arbre à cames commandant les soupapes d'échange de gaz d'un moteur à combustion interne par rapport à un élément d'entraînement, notamment une chaîne ou courroie, comprenant un moteur électrique de réglage sans balai avec un stator fixe relativement à une couronne extérieure, le moteur étant accouplé à un réducteur (43) à trois entrées/sorties comprenant la couronne extérieure (44), un élément d'entrée (46) et un disque de sortie, la couronne extérieure (44) étant emmenée par ledit élément d'entraînement, ledit disque de sortie étant solidaire de l'arbre à cames (41) **caractérisé en ce que** ledit moteur est une machine électrique conforme à l'une quelconque des revendications 1 à 6.

**15.** Système comprenant un actionneur électromagnétique destiné au pilotage d'une soupape de décharge pour turbocompresseur et une soupape de décharge, **caractérisé en ce que** ledit moteur est une machine électrique conforme à l'une quelconque des revendications 1 à 6.

**Patentansprüche**

**1.** Elektrische Maschine, die eine erste (4a, 4b, 4c) und eine zweite (5a, 5b, 5c) Dreiphasenwicklung aufweist, umfassend einen Stator (3), der aus einem zylindrischen Joch (10) aus weichmagnetischem Material gebildet ist, das radial durch eine Zahnanordnung (7, 8) verlängert wird, wobei ein Teil der genannten Zahnanordnung (8) die genannten Wicklungen trägt, wobei die genannten Wicklungen (4a, 4b, 4c, 5a, 5b, 5c) voneinander getrennt sind, wobei die genannte erste dreiphasige Wicklung (4a, 4b, 4c) elektrisch in Dreieckschaltung geschaltet ist, wobei die zweite dreiphasige Wicklung (5a, 5b, 5c) elektrisch in Sternschaltung geschaltet ist, **dadurch gekennzeichnet, dass** die Gesamtzahl der Zähne (7, 8) des Stators (3) gleich 3 $(N1 + N2) \cdot (k + 1)$ ist, wobei k eine natürliche Zahl größer oder gleich 1 ist, die die Anzahl aufeinanderfolgender Spulen einer gleichen Phase einer Wicklung darstellt, wobei N1 und N2 die Anzahl der Gruppen aufeinanderfolgender Spulen derselben Phase der ersten bzw. der zweiten Wicklung sind, wobei die beiden Wicklungen durch mindestens einen Zahn (7) getrennt sind, der keine Wicklung trägt, und wobei zudem jede Gruppe aufeinanderfolgender Spulen derselben Phase durch mindestens einen Zahn (7) getrennt ist, der keine Wicklung trägt.

**2.** Elektrische Maschine nach Anspruch 1, **dadurch gekennzeichnet, dass** die Wicklungen von Hauptzähnen (8) getragen werden, dass die Zähne, die keine Wicklung tragen, Entkopplungszähne (7) sind und dass die Winkelbreite des Entkopplungszahns (7), gemessen vom Mittelpunkt der Maschine aus und begrenzt durch die Breite des freien Endes der genannten Zähne, kleiner oder gleich der Winkelbreite der genannten Hauptzähne (8) ist.

**3.** Elektrische Maschine nach Anspruch 1, **dadurch gekennzeichnet, dass** N1 = N2 = k = 1, wobei der genannte Stator (3) insgesamt zwölf Zähne (7, 8) aufweist, darunter abwechselnd sechs gewickelte und sechs nicht gewickelte Zähne.

**4.** Elektrische Maschine nach einem der Ansprüche 1, 2 oder 3, **dadurch gekennzeichnet, dass** die erste Dreiphasenwicklung von einer ersten Gruppe aufeinanderfolgender Zähne des Stators getragen wird, bei der sich gewickelte und nicht gewickelte Zähne abwechseln, und dadurch, dass die zweite dreiphasige Wicklung auf einer zweiten Gruppe aufeinanderfolgender Zähne des Stators angeordnet ist, bei der sich gewickelte und nicht gewickelte Zähne abwechseln, wobei die erste und die zweite Gruppe von Zähnen des Stators voneinander getrennt sind.

**5.** Elektrische Maschine nach einem der Ansprüche 1, 2 oder 3, **dadurch gekennzeichnet, dass** die erste Dreiphasenwicklung und die zweite Dreiphasenwicklung abwechselnd angeordnet sind, sodass ein periodisches Muster entsteht, das aus einem ersten Zahn des Stators, der eine Spule der ersten Dreiphasenwicklung trägt, einem zweiten Zahn des Stators, der keine Wicklung trägt, und einem dritten Zahn des Stators gebildet ist, der eine Spule der zweiten Wicklung trägt, wobei der erste, der zweite und der dritte Zahn in Umfangsrichtung des Stators aufeinanderfolgen.

6. Elektrische Maschine nach Anspruch 4, **dadurch gekennzeichnet, dass** die erste Wicklung über einen ersten Sektor von 180° verteilt ist, dass die zweite Wicklung über einen zweiten Sektor von 180° verteilt ist, wobei der erste und der zweite Sektor voneinander getrennt sind, und wobei jede dieser Wicklungen elektrisch mit einer Gruppe von Leiterbahnen verbunden ist, wobei diese Gruppen von Leiterbahnen voneinander getrennt sind und sich über zwei voneinander getrennte Winkelbereiche von jeweils 180° erstrecken.

7. Verfahren zur Steuerung einer Maschine die eine dreiphasige Doppelwicklung nach einem der vorstehenden Ansprüche aufweist, **dadurch gekennzeichnet, dass** jede Dreiphasenwicklung durch eine Blocksequenz gesteuert wird und dass jede Dreiphasenwicklung mit einer elektrischen Phasenverschiebung von 30° zueinander gesteuert wird.

8. Verfahren zur Steuerung einer Maschine die eine dreiphasige Doppelwicklung nach Anspruch 7 aufweist,
**dadurch gekennzeichnet, dass** die erste und die zweite Wicklung von zwei unterschiedlichen Leistungsbrücken (14, 15) gespeist werden, die jeweils sechs elektronische Schaltzellen umfassen.

9. Verfahren zur Steuerung einer Maschine die eine dreiphasige Doppelwicklung nach Anspruch 8 aufweist, **dadurch gekennzeichnet, dass** die genannte Blocksteuerung mittels einer Pulsbreitenmodulation, kurz PWM, erfolgt, dass eine erste PWM an die erste Wicklung angelegt wird, dass eine zweite PWM auf die zweite Wicklung angewendet wird und dass die erste und die zweite PWM so angewendet werden, dass Überlappungszeiten, in denen positive Halbwellen gleichzeitig angelegt werden, aufgehoben oder minimiert werden.

10. Verfahren zur Steuerung einer Maschine die eine dreiphasige Doppelwicklung nach Anspruch 9 aufweist, **dadurch gekennzeichnet, dass** die genannten PWM an die genannten elektronischen Schalter angelegt werden.

11. Verfahren zur Steuerung einer Maschine die eine dreiphasige Doppelwicklung nach Anspruch 8 aufweist, **dadurch gekennzeichnet, dass** die Maschine zusätzlich und vor den genannten Leistungsbrücken aus sechs elektronischen Schaltzellen eine Gleichrichterbrücke umfasst, die aus vier elektronischen Schaltzellen besteht und am Eingang ein zweidrahtiges elektrisches Signal von einer zentralen Steuereinheit empfängt, wobei die Blocksteuerung mittels einer Pulsbreitenmodulation PWM erfolgt, wobei das PWM-Steuersignal am Eingang der Gleichrichterbrücke anliegt, wobei die Gleichrichterbrücke die aktive Gleichrichtung des PWM-Steuersignals durchführt und wobei die beiden Leistungsbrücken in ganzen Schritten gesteuert werden.

12. Verfahren zur Steuerung einer Maschine die eine dreiphasige Doppelwicklung nach einem der Ansprüche 7 bis 11 aufweist, **dadurch gekennzeichnet, dass** die Steuerung dieser beiden Dreiphasenwicklungen durch ein und denselben Mikroprozessor erfolgt.

13. Verfahren zur Steuerung einer Maschine die eine dreiphasige Doppelwicklung nach einem der Ansprüche 7 bis 11 aufweist, **dadurch gekennzeichnet, dass** die Steuerung dieser beiden Dreiphasenwicklungen durch zwei separate Mikroprozessoren erfolgt.

14. Verstellvorrichtung zur stufenlosen Verstellung des Drehwinkels einer Nockenwelle, die die Gaswechselventile eines Verbrennungsmotors steuert, relativ zu einem Antriebselement, insbesondere einer Kette oder einem Riemen, mit einem bürstenlosen Stellmotor mit einem Stator, der relativ zu einem Außenring feststeht, wobei der Motor mit einem Getriebe (43) mit drei Ein- und Ausgängen gekoppelt ist, das den Außenring (44), ein Antriebselement (46) und eine Abtriebsscheibe umfasst, wobei der Außenring (44) von dem Antriebselement angetrieben wird, wobei die Ausgangsscheibe fest mit der Nockenwelle (41) verbunden ist, **dadurch gekennzeichnet, dass** der Motor eine elektrische Maschine nach einem der Ansprüche 1 bis 6 ist.

15. System, das einen elektromagnetischen Aktuator zur Steuerung eines Turbolader-Überdruckventils und ein Überdruckventil umfasst, **dadurch gekennzeichnet, dass** der Motor eine elektrische Maschine nach einem der Ansprüche 1 bis 6 ist.

## Claims

1. An electric machine having a first (4a, 4b, 4c) and a second (5a, 5b, 5c) three-phase windings and comprising a stator (3) formed of a cylindrical yoke (10) made of a soft ferromagnetic material radially extending to a set of teeth (7, 8), a part of said set of teeth (8) carrying said windings, said windings (4a, 4b, 4c, 5a, 5b, 5c) being distinct from one another, said first three-phase winding (4a, 4b, 4c) being electrically triangle-connected, said second three-phase winding (5a, 5b, 5c) being electrically star-connected **characterised in that** the total number of said teeth (7, 8) of stator (3) is equal to 3 · *(N1 + N2)* ·(*k* + 1) with k being a natural number higher than or equal to 1 representing the number of consecutive coils of a same phase of a winding, N1 and N2 being the number of groups of consecutive coils of a same phase respectively of said first and second windings, said two windings being separated by at least one tooth (7) carrying no winding, and also each group of consecutive coils of a same phase being separated by at least one tooth (7) carrying no winding.

2. The electric machine according to claim 1, **characterised in that** said windings are carried by main teeth (8), **in that** said teeth carrying no winding are decoupling teeth (7) and **in that** the angular width of said decoupling tooth (7), considered from the centre of the machine and delimited by the width of the free end of said teeth, is less than or equal to the angular width of said main teeth (8).

3. The electric machine according to claim 1 **characterised in that** N1=N2=k=1, said stator (3) having twelve teeth (7, 8) in total of which six teeth are wound and six teeth are unwound alternately.

4. The electric machine according to any one of claims 1, 2 or 3, **characterised in that** said first three-phase winding is carried by a first group of consecutive stator teeth with alternating wound tooth and unwound tooth and **in that** said second three-phase winding is carried by a second group of stator teeth with alternating wound tooth and unwound tooth, said first and second groups of stator teeth being separate from each other.

5. The electric machine according to any one of claims 1, 2 or 3, **characterised in that** said first three-phase winding and said second three-phase winding are alternated so that a periodic pattern is formed of a first tooth of said stator carrying a coil of said first winding, a second tooth of said stator carrying no winding and a third tooth of said stator carrying a coil of said second winding, said first, second and third teeth being consecutive along the circumferential direction of said stator.

6. The electric machine according to claim 4, **characterised in that** said first winding is angularly distributed over a first 180° sector, **in that** said second winding is angularly distributed over a second 180° sector, said first and second sectors being separate from one another, and **in that** each of said windings is electrically connected to a set of electric tracks, said sets of electric tracks being separate from each other and angularly distributed over two angular 180° sectors separate from each other.

7. A method for controlling a machine having a double three-phase winding according to any one of the preceding claims, **characterised in that** each three-phase winding is controlled by a block sequence and **in that** each three-phase winding is controlled with an electrical offset of 30° from one another.

8. The method for controlling a machine having a double three-phase winding according to claim 7 **characterised in that** said first and second windings are supplied by two different power bridges (14, 15) each including six electronic switch cells.

9. The method for controlling a machine having a double three-phase winding according to claim 8, **characterised in that** said block control is carried out using pulse width modulation, known as PWM, **in that** a first PWM is applied to the first winding, **in that** a second PWM is applied to the second winding and **in that** said first and second PWMs are applied so as to cancel or minimise the overlap periods during which the positive alternations are applied at the same time.

10. The method for controlling a machine having a double three-phase winding according to claim 9, **characterised in that** said PWMs are applied to said electronic switches.

11. The method for controlling a machine having a double three-phase winding according to claim 8, **characterised in that** the machine further comprises, upstream of said power bridges with six electronic switch cells, a rectifier bridge formed of four electronic switch cells receiving as an input a two-wire electrical signal from a central control unit, said block control being carried out using pulse width modulation, known as PWM, said PWM control being applied as an input of said rectifier bridge, said rectifier bridge carrying out active rectification of said PWM control and said two power bridges being controlled in full steps.

12. The method for controlling a machine having a double three-phase winding according to any one of claims 7 to 11, **characterised in that** controlling said two three-phase windings is carried out by one and a single microprocessor.

13. The method for controlling a machine having a double three-phase winding according to any one of claims 7 to 11, **characterised in that** controlling said two three-phase windings is carried out by two separate microprocessors.

14. An adjusting device for continuous phase shift of the angle of rotation of a camshaft controlling the gas exchange valves of an internal combustion engine relative to a drive element, especially a chain or belt, comprising a brushless electric adjustment motor with a fixed stator relative to an outer ring gear, the motor being coupled to a three-input/output reduction gear (43) comprising the outer ring gear (44), an input element (46) and an output disc, the outer ring gear (44) being driven by said drive element, said output disc being integral with the camshaft (41) **characterised in that** said motor is an electric machine according to any one of claims 1 to 6.

15. A system comprising an electromagnetic actuator for governing a relief valve for a turbocharger and a relief valve, **characterised in that** said motor is an electric machine according to any one of claims 1 to 6.

FIGURE 1

FIGURE 2

FIGURE 3

FIGURE 4

FIGURE 5

FIGURE 6

FIGURE 7

FIGURE 8

FIGURE 9a

FIGURE 9b

FIGURE 10

FIGURE 11

FIGURE 12

P1

PWM 1

PWM 2

P2

PWM 1

PWM 2

25%        50%        75%        100%

FIGURE 13

CAS1                    CAS2

DIR1

DIR2

V

DIR

HS1        ON

LS1        ON        ON

HS2        ON

LS2        ON        ON

0°  30°  60°  90°  120°  150°  180°  210°  240°  270°  300°  330°  360°  390°  420°  450°  480°  510°  540°  570°  600°  630°  660°  690°  720°

FIGURE 14

FIGURE 15

FIGURE 16

FIGURE 17

FIGURE 18

FIGURE 19a

FIGURE 19b

FIGURE 20a

FIGURE 20b

$$T_n = \gamma \,.\, n \,.\, 2.\frac{V_{DC}.D}{R\varphi_{eq} + L\varphi_{eq}}$$

$$\Delta T_n = \gamma \,.\, n \,.\, 2.\frac{V_{DC}.\Delta D}{R\varphi_{eq} + L\varphi_{eq}}$$

FIGURE 21a

$$T_m = \gamma \,.\, n \,.\,\frac{V_{DC}.D}{R\varphi_{eq} + L\varphi_{eq}}$$

$$\Delta T_m = \gamma \,.\, n \,.\,\frac{V_{DC}.\Delta D}{R\varphi_{eq} + L\varphi_{eq}}$$

FIGURE 21b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3098963 A
- US 2014375232 A
- WO 2016012703 A
- EP 3224929 A
- US 2017264178 A1
- EP 3464841 A